# EUROPÄISCHE PATENTSCHRIFT

(11) **EP 2 307 296 B1**
(45) Veröffentlichungstag und Bekanntmachung des Hinweises auf die Patenterteilung: **19.12.2012**
(21) Anmeldenummer: 09777083.8
(22) Anmeldetag: 09.07.2009
(51) Int. Cl.: B65G 47/51

(54) **SKALIERBARER VERSANDPUFFER MIT INTEGRIERTER SORTIERFUNKTION**
SCALABLE SHIPPING BUFFER WITH INTEGRATED SORTING FUNCTION
ACCUMULATEUR D'EXPÉDITION MODULABLE AVEC FONCTION DE TRI INTÉGRÉE

(30) Priorität: 30.07.2008 DE 102008036564
(43) Veröffentlichungstag der Anmeldung: 13.04.2011
(73) Patentinhaber: SSI Schäfer Peem GmbH, 8051 Graz (AT)
(72) Erfinder: BUCHMANN, Rainer, A-8010 Graz (AT); SÜSS, Heiko, A-8044 Graz (AT); WINKLER, Max, A-8010 Graz (AT)
(74) Vertreter: Witte, Weller & Partner
(86) Internationale Anmeldenummer: PCT/EP2009/004998
(87) Internationale Veröffentlichungsnummer: WO 2010/012364

(56) Entgegenhaltungen:
- WO-A-2007/082741
- DE-A1- 3 830 692
- DE-A1- 19 518 298
- DE-A1-102004 001 181

## Beschreibung

Die vorliegende Erfindung betrifft einen skalierbaren Versandpuffer mit integrierter Sortierfunktion, wie er insbesondere in einem Zentrallager von Einzelhändlern zur Vorbereitung von LKW-Ladungen benutzt wird, mit denen Filialen gemäß einem Auftrag mit Waren versorgt werden.

In herkömmlichen Kommissionieranlagen ist es häufig so, dass einzelne Kommissionieraufträge über den Tag verteilt empfangen und abgearbeitet werden. Einige Aufträge können unmittelbar nach dem Empfang kommissioniert werden. Andere Aufträge sind vielleicht noch nicht eingetroffen, werden aber im Laufe des Tages empfangen. Dabei kann es auch vorkommen, dass ein Auftraggeber, zum Beispiel eine Einzelhandelsfiliale, mehrere Aufträge mit verschiedenen Inhalten am gleichen Tag schickt. Hier stellt sich das Problem, dass Waren, die zum Beispiel an ein und dieselbe Filiale geliefert werden sollen, über einen gewissen Zeitraum gespeichert werden müssen, um eine Anzahl von Auslieferfahrten so gering wie möglich zu halten. Grundsätzlich stellt sich das Problem, Lieferungen aufzustauen und für einen Ladevorgang vorzubereiten.

Um dieses Problem zu lösen, wurden im Stand der Technik so genannte "Staubahnen" vorgeschlagen, auf denen Waren eines einzigen Auftrags bzw. einer einzigen Filiale (eventuell Summe von mehreren Aufträgen) aufgestaut werden. Solche Staubahnen sind exemplarisch in dem europäischen Patent EP 1 542 916 B1 beschrieben. Diese Staubahnen sind üblicherweise sehr lang, um alle Waren, die für einen LKW bestimmt sind, hinter- und nebeneinander aufstauen zu können. Die EP 1 542 916 B1 gibt ein Verfahren an, wie man Lücken zwischen einzelnen Waren eines Auftrags so klein wie möglich halten kann, um die aufzustauenden Waren möglichst dicht zu packen. Nichtsdestotrotz wird viel Platz benötigt, um entsprechend lange Staubahnen in einem Versandbereich der Kommissionieranlage aufbauen zu können. In der Regel werden mehrere Aufträge (LKW-Ladungen) parallel gehandhabt, indem mehrere Staubahnen nebeneinander (in einer horizontalen Ebene) aufgebaut werden.

Weitere Förder- und Beladevorrichtungen sind den Druckschriften DE 38 30 692 A1, US 3 974 888 A, DE 10 2004 001 181 A, EP 438 667 A2, EP 447 104 A2 und DE 195 18 298 A1 zu entnehmen.

Eine andere Vorrichtung ist aus WO2007/082741 bekannt, die den Oberbegrift Anspruchs 1 offenbart.

Ein weiteres Problem, das sich beim Vorbereiten verschiedener Waren ergibt, ist in der Be- bzw. Entladereihenfolge der Waren zu sehen. Speziell bei Einzelhändlerfilialen wird üblicherweise eine Entladereihenfolge für die bestellten Waren gewünscht, da die bestellten Waren aus dem LKW heraus direkt in die Regale einer Filiale ausgeladen werden. Daher wird von vielen Auftraggebern eine Entladereihenfolge vorgegeben, die sich in Form einer gespiegelten Beladereihenfolge niederschlägt. Wenn nun aber verschiedene Artikel eines Auftrags zu verschiedenen Zeitpunkten innerhalb der Kommissionieranlage gehandhabt werden, ist das Vorsehen eines so genannten "Sorters" (d.h. einer Sortiereinrichtung) zwingend erforderlich, der dem Versandbereich mit seinen vielen Staubahnen vorgeschaltet ist. Als exemplarischer Sorter sei hier ein Förderstreckenkreisel genannt, der zwischen einen Lager- und Kommissionierbereich und einen Versandbereich mit mehreren Ziel- bzw. Versandstellen geschaltet ist. Waren können längere Zeit innerhalb des Kreisels zirkulieren, bis der Artikel in den Kreisel eingeschleust wird, der gemäß einer vorbestimmten Be- bzw. Entladereihenfolge als nächstes in der Staubahn (Versandstelle) benötigt wird. Dies hat zum einen den Nachteil, dass wiederum eine relativ platzraubende Einheit (Förderstreckenkreisel als Sorter) eingesetzt wird. Zum anderen kann es insbesondere bei einer parallelen Abarbeitung von Aufträgen zu einem erheblichen Rechenaufwand der übergeordneten Steuerung (Materialflussrechner) kommen, um die Waren der verschiedenen Aufträge simultan zu verwalten, insbesondere simultan zu mischen und dann wieder voneinander zu trennen.

Es ist daher eine Aufgabe der vorliegenden Erfindung, ein System und ein Verfahren bereitzustellen, mit denen ein Flächenverbrauch in Kommissionieranlagen so weit wie möglich reduziert wird, ohne auf übliche Eigenschaften, wie zum Beispiel Speichern oder Umsortieren, verzichten zu müssen.

Diese Aufgabe wird mit einem skalierbaren Versandpuffer, gemäß Anspruch 1, mit integrierter Sortier-funktion zum Vorbereiten einer aus mehreren verschiedenen Waren bestehenden Warensendung gelöst, wobei die Waren in einer geordneten Reihenfolge in ein Transportfahrzeug zu laden sind und wobei die Waren in einer ungeordneten Reihenfolge an den Versandpuffer geliefert werden, wobei der Versandpuffer folgendes aufweist: eine, insbesondere zentrale, Abzugsbahn zum stromabwärts gerichteten Fördern der Waren an einen Übergabepunkt, an welchen die Waren gemäß der geordneten Reihenfolge in Richtung Transportfahrzeug übergeben werden, wobei sich die Abzugsbahn im Wesentlichen in einer Längsrichtung erstreckt; eine erste Pufferbahn, die sich im Wesentlichen parallel zu und angrenzend an die Abzugsbahn erstreckt und die eine erste Anzahl von Pufferplätzen aufweist; eine Vielzahl von Transfereinrichtungen, wobei die Transfereinrichtungen derart angeordnet sind, dass jedem Pufferplatz der ersten Pufferbahn zumindest eine Transfereinrichtung für eine Überführung von einer oder mehreren Waren von der ersten Pufferbahn auf die Abzugsbahn zugeordnet ist; und eine Einschleuseinrichtung, die derart angeordnet ist, dass die Waren, die der Abzugsbahn in der ungeordneten Reihenfolge zugeführt werden, in die erste Pufferbahn einschleusbar sind.

Der Versandpuffer gemäß der vorliegenden Erfindung fällt kürzer als herkömmliche Staubahnen aus, erfüllt jedoch deren Funktionalität vollständig. Neben der Funktion, Waren zu puffern bzw. zu speichern, können Waren auch in eine vorbestimmte Reihenfolge gebracht werden. Die Waren können sortiert werden, indem sie auf eine oder mehrere Pufferbahnen ausgelenkt werden, die seitlich zur (gegenüber einer herkömmlichen Staubahn verkürzten) Abzugsbahn angeordnet sind.

Der Versandpuffer ist beliebig erweiterbar, indem zum Beispiel weitere Pufferbahnen vorgesehen werden, die seitlich nach außen relativ zur Abzugsbahn angeordnet werden.

Erfindungsgemäß weist der Versandpuffer des Weiteren auf: eine zweite Pufferbahn, die sich parallel zur Abzugsbahn erstreckt und die entweder, vorzugsweise längs, an die Abzugsbahn angrenzt oder die, vorzugsweise längs, an die erste Pufferbahn angrenzt, wobei die Waren auf der zweiten Pufferbahn in entgegengesetzter Richtung relativ zur ersten Pufferbahn bewegbar sind; eine zweite Einschleuseinrichtung, die derart angeordnet ist, dass Waren von der Abzugsbahn bzw. der ersten Pufferbahn in die zweite Pufferbahn eingeschleust werden können; und eine Ausschleuseinrichtung, die angeordnet ist, um die Waren, die sich auf der zweiten Pufferbahn befinden, auf die Abzugsbahn bzw. die erste Pufferbahn auszuschleusen.

Durch das Vorsehen einer zweiten oder von weiteren Pufferbahnen erhöht sich die Speicherkapazität des Versandpuffers. Auch können so Warensendungen, die aus einer Vielzahl von verschiedenen Waren bestehen, leichter sortiert werden, da es mehr Möglichkeiten gibt, die Waren von der Abzugsbahn, die von ihrer Funktionalität her einer herkömmlichen Staubahn entspricht, auszulenken, ohne nachfolgende Waren ebenfalls auslenken zu müssen, und dann zu einem geeigneten Zeitpunkt wieder in die Abzugsbahn einzuschleusen.

Gemäß einer weiteren vorteilhaften Ausgestaltung ist die zweite Einschleuseinrichtung an einem stromabwärts gelegenen Ende der Abzugsbahn bzw. der ersten Pufferbahn angeordnet, und die Ausschleuseinrichtung ist an einem stromaufwärts gelegenen Ende der zweiten Pufferbahn angeordnet.

Auf diese Weise lässt sich die gesamte Länge der Abzugsbahn zum Puffern von Waren nutzen. Die ungeordneten Pufferbahnen können vorzugsweise die gleiche Länge wie die Abzugsbahnen aufweisen, so dass sich die Speicherkapazität weiter erhöht. Des Weiteren lässt sich auf diese Weise ein Kreisel erzeugen, in welchem die Waren beliebig lang zirkulieren können.

Ferner ist es von Vorteil, wenn bei jedem Pufferplatz der zumindest ersten Pufferbahn eine Transfereinrichtung vorgesehen ist.

Mit den Transfereinrichtungen können ausgeschleuste Waren wieder auf die Abzugsbahn eingeschleust werden. Je mehr Transfereinrichtungen vorgesehen sind, desto größer sind die Möglichkeiten, flexibel auf die Reihenfolge, in der die Waren auf die Abzugsbahn bewegt werden, Einfluss zu nehmen. Die Waren, die sich auf dieser ersten Pufferbahn befinden, können selbst in einer ungeordneten Reihenfolge vorliegen, da man mithilfe der einzeln ansteuerbaren Transfereinrichtungen Einfluss auf die Reihenfolge der Rückeinschleusungen in die Abzugsbahn hat. Die Transfereinrichtungen stellen in diesem Sinne eine eigenständige Sequenzierstufe dar.

Außerdem hat es sich als vorteilhaft herausgestellt, wenn die zweite Pufferbahn mit ihrer Längsseite parallel an die Abzugsbahn angrenzt und eine zweite Anzahl von Pufferplätzen aufweist, wobei jedem Pufferplatz der zweiten Pufferbahn eine Transfereinrichtung zugeordnet ist.

Wie bereits oben erwähnt, erhöht das Vorsehen von Transfereinrichtungen die Sortierfähigkeit des Versandpuffers signifikant. Waren, die auf die zweite Pufferbahn ausgeschleust werden, können in beliebiger Reihenfolge auf die zweite. Pufferbahn ausgeschleust werden. Ein Zirkulieren der Waren zwischen den verschiedenen Bahnen ist dann nicht erforderlich, da dann jede Pufferbahn Waren in die Abzugsbahn ausschleusen kann.

Gemäß einer weiteren bevorzugten Ausführungsform sind weitere Pufferbahnen mit jeweiligen weiteren Einschleuseinrichtungen und weiteren Ausschleuseinrichtungen vergesehen.

Gemäß einer weiteren vorteilhaften Ausgestaltung weisen aneinandergrenzende Pufferbahnen zumindest eine Bahnwechseleinrichtung auf, die es den Waren erlauben, räumlich zwischen der Einschleuseinrichtung und der Ausschleuseinrichtung einer Pufferbahn auf die angrenzende Pufferbahn zu wechseln.

Insbesondere weisen die Bahnen alle annähernd eine gleiche geometrische Länge auf.

Weiter ist es von Vorteil, wenn die Bahnen angetriebene Fördermittel aufweisen, um die Waren in Längsrichtung zu transportieren.

Gemäß einer weiteren Ausführungsform werden als Transfereinrichtungen Schieber, die seitlich zur ersten Pufferbahn angeordnet sind, oder höhenbewegliche Riemenausschleuser verwendet, wobei ein Riemenausschleuser quer zur Längsrichtung einer Bahn orientiert ist und ferner in dafür in der Bahn, die vorzugsweise als Rollenförderer ausgebildet ist, vorgesehene Ausnehmungen angeordnet ist.

Gemäß einer weiteren vorteilhaften Ausgestaltung ist die Pufferbahn Teil (d.h. ein Regalfach) eines Vertikalumlaufregals, wobei jedes Regalfach des Umlaufregals ein angetriebenes Fördermittel aufweist, um Waren, die an das Regalfach abgegeben wurden, stromaufwärts und/oder stromabwärts innerhalb des Regals fördern zu können, und wobei jedes Regalfach auf Höhe der Abzugsbahn angehalten werden kann, um einen Austausch der Waren zwischen dem Regalfach (im Sinne einer Pufferbahn) und der Abzugsbahn zuzulassen.

Der Einsatz von Vertikalumlaufregalen resultiert in einer signifikanten Erhöhung der Speicherkapazität bei gleichbleibender Nutzfläche. Durch den Einsatz von Vertikalumlaufregalen ist es möglich, mehrere verschiedene Warensendungen über ein und dieselbe Abzugsbahn für einen nachfolgenden Versand vorzubereiten. Anstatt mehrere parallele Versandpuffer vorzusehen, die in einer horizontalen Ebene nebeneinander angeordnet sind, ermöglicht der Einsatz eines vertikal umlaufenden Regals die Ausnutzung der Raumhöhe bei konstanter Nutzfläche. So ist es z.B. möglich, dass alle Versandstellen (z.B. Lkw-Laderampen) einer Anlage über nur eine einzige Abzugsbahn mit Warensendungen in der vorgegebenen Reihenfolge versorgt werden. Dies ist insbesondere für solche Anlagen von Vorteil, bei denen die Warensendungen einigermaßen gleichmäßig über den Tagesablauf verteilt liegen. Die mitunter sehr hohen Baukosten für große Versandhallen lassen sich auf diese Weise sehr stark reduzieren. Auch wird weniger Fläche für den Versandbereich benötigt.

Insbesondere werden mehrere Abzugsbahnen übereinander angeordnet, wobei jede Abzugsbahn über eine separate Förderstrecke mit Waren gespeist werden kann.

Der Versandpuffer baut bei dieser Ausführung sehr platzsparend. Die Grundfläche kann sehr klein gehalten werden, wenn der Versandpuffer mit einer entsprechenden Höhe gebaut wird. Ein derartiger Versandpuffer ist insbesondere dann von Vorteil, wenn mehrere Versandstellen in verschiedenen (Gebäude-)Etagen übereinander angeordnet sind.

Weiter ist es von Vorteil, wenn an einem stromaufwärts gelegenen Ende und/oder an einem stromabwärts gelegenen Ende der Abzugsbahn ein Vertikallift angeordnet ist, um die auf der Abzugsbahn befindlichen Waren an übereinander angeordnete Versandstellen abgeben zu können.

Diese Ausführungsform ist insbesondere bei der Verwendung einer einzigen Abzugsbahn von Vorteil, wenn mehrere übereinander angeordnete Versandstellen vorgesehen sind. Umgekehrt können aber auch mehrere übereinander angeordnete Abzugsbahnen so eine einzige Versandstelle mit Warensendungen versorgen. Während eine erste Abzugsbahn ihre Warensendung abgegeben hat und gerade dabei ist, eine weitere Warensendung zusammenzustellen bzw. zu ordnen, kann zum Beispiel eine darüber- oder darunterliegende Abzugsbahn ihre Warensendung mithilfe des Vertikallifts in Richtung der Versandstelle befördern. Auf diese Weise kann erheblich Zeit eingespart werden, da Warensendungen parallel vorbereitet und abgearbeitet werden können.

Gemäß einer besonderen Ausgestaltung koppelt der Übergabepunkt an eine Versandförderstrecke, die eine Vielzahl von horizontal nebeneinander angeordneten Versandstellen mit Waren in der geordneten Reihenfolge speisen kann.

Sollten mehrere Versandstellen vorhanden sein, so können diese bzw. zumindest einige davon, räumlich relativ weit voneinander entfernt sein, so dass der Einsatz einer Fördertechnik zum Versorgen dieser weit entfernt voneinander angeordneten Versandstellen sinnvoll ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein schematisches Blockdiagramm einer Kommissionieranlage gemäß der vorliegenden Erfindung;
- Fig. 2: eine Draufsicht auf eine erste Ausführungsform eines erfindungsgemäßen Versandpuffers;
- Fig. 3: eine zweite Ausführungsform eines erfindungsgemäßen Versandpuffers;
- Figuren 4a bis c: eine zeitliche Abfolge eines Sortier- und Abzugvorgangs gemäß der vorliegenden Erfindung;
- Figuren 5a bis c: einen Sortier- und Abzugvorgang bei komplexer ungeordneter Reihenfolge der Waren;
- Figuren 6a bis c: stark schematisierte Materialflussdiagramme zu verschiedenen Ausführungsformen des Versandpuffers gemäß der vorliegenden Erfindung;
- Fig. 7: eine perspektivische Ansicht eines schematischen Riemenausschleusers;
- Fig. 8: eine perspektivische Ansicht eines stark vereinfachten Versandpuffers gemäß der vorliegenden Erfindung, bei dem Vertikalumlaufregale seitlich zur Abzugsbahn eingesetzt werden;
- Fig. 9: eine Seitenansicht auf ein Vertikalumlaufregal der Fig. 8; und
- Fig. 10: ein Flussdiagramm des Verfahrens gemäß der vorliegenden Erfindung.

In der nachfolgenden Beschreibung der Figuren werden gleiche Merkmale mit den gleichen Bezugsziffern bezeichnet. Ähnliche Merkmale werden mit ähnlichen Bezugsziffern bezeichnet.

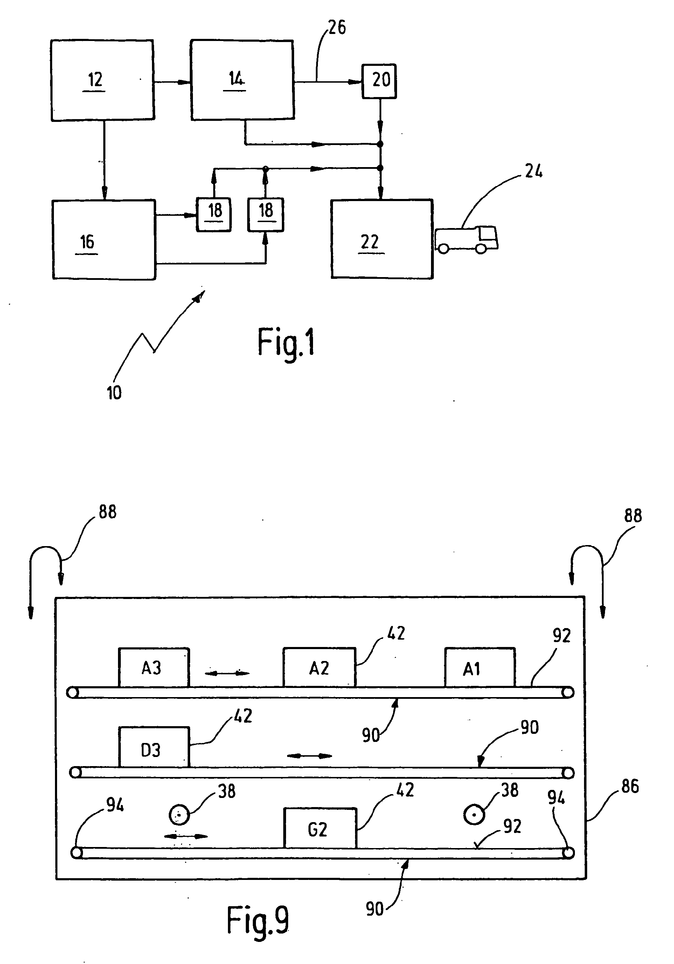

Fig. 1 zeigt ein Blockdiagramm einer Kommissionieranlage 10 gemäß der vorliegenden Erfindung. Die Kommissionieranlage 10 der Fig. 1 umfasst exemplarisch ein Hochregallager 12, ein Behälterlager 14, ein Tablarlager 16, eine oder mehrere Vereinzelungsstationen 18, einen oder mehrere Kommissionierplätze 20 sowie zumindest einen erfindungsgemäßen Versandpuffer 22, der Transportfahrzeuge mit Warensendungen versorgt, wobei als Transportfahrzeug hier exemplarisch ein LKW 24 gezeigt ist. Es versteht sich, dass mittels des Versandpuffers 22 ein oder mehrere Transportfahrzeuge mit Warensendungen versorgt werden können, obwohl in der Fig. 1 nur ein einziger LKW 24 gezeigt ist. Die verschiedenen Module der Fig. 1 sind über eine mit 26 bezeichnete Fördertechnik miteinander verbunden. Als Fördertechnik können zum Beispiel Gurtbänder, Rollenförderer, Kettenförderer, etc. eingesetzt werden.

Ferner versteht es sich, dass die Waren mit oder ohne Ladungshilfsträger ausgeliefert werden können. Die Waren können in einem Lagerbereich 12-16 der Anlage 10 in Ladehilfsmitteln, wie zum Beispiel in Behältern, auf Paletten, auf Tablaren, etc., gelagert sein. Wenn eine Warensendung ohne Ladungsträger gewünscht ist, kommt die Vereinzelungsstation 18 zum Einsatz. Die Vereinzelungsstation 18 trennt die Waren von ihren Ladungsträgern. Werden die Waren in Behältern gelagert, so können die Waren der Warensendung an einem Kommissionierplatz dem Behälter entnommen und in Richtung des Versandpuffers 22 gefördert werden.

Bei der in Fig. 1 gezeigten Anlage 10 kann es sich um eine klassische Kommissionieranlage handeln, wie sie beispielsweise von Einzelhändlern oder Apotheken als Zentrallager eingesetzt werden. Mithilfe dieser Zentrallager lassen sich eine Vielzahl von Filialen mit Waren versorgen. Die Filialen platzieren verschiedene Aufträge in der Kommissionieranlage 10. Kommissionieraufträge können aus einer Vielzahl von Auftragszeilen bestehen, die wiederum aus verschiedenen Waren mit unterschiedlichen Anzahlen derselben bestehen. Insbesondere im Einzelhandel werden täglich LKW mit Warensendungen beladen, die in einer vorbestimmten Reihenfolge in den Laster zu laden sind, damit die Waren beim Ausladen am Ort der Filiale bereits in der richtigen Reihenfolge in die Filiale eingefahren werden können. Der Rechen- und Steuerungsaufwand in der Kommissionieranlage 10 ist also relativ hoch, um vorab die (umgekehrte) Reihenfolge der Entladung beim Planen der Beladung des LKW zu berücksichtigen. Die Planung wird umso schwieriger, je länger nicht definitiv feststeht, welche Waren an welche Zielstelle zu senden sind. Die vorliegende Erfindung hilft, diese Schriegkeiten zu verringern und in den Griff zu bekommen.

Unter Bezugnahme auf die nächsten nachfolgenden Figuren wird der Fokus der Betrachtung auf den Versandpuffer 22 bzw. Abwandlungen davon gerichtet werden.

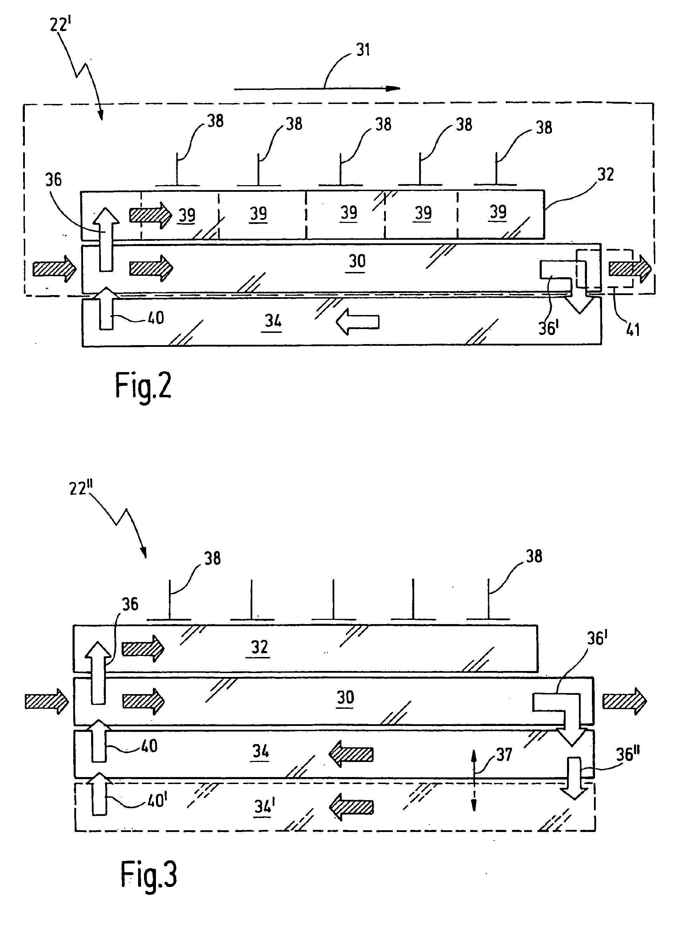

In Fig. 2 ist eine erste Ausführungsform eines Versandpuffers 22' gezeigt, in welchem, hier nicht dargestellte, Waren auf einer Abzugsbahn 30 in einer Längsrichtung 31, die mithilfe eines Pfeils angedeutet ist, in der Fig. 1 von links nach rechts transportiert werden. Der Versandpuffer 22' weist des Weiteren zumindest eine erste Pufferbahn 32 auf. Die erste Pufferbahn 32 grenzt hier direkt längs an die Abzugsbahn 30 an. Es versteht sich, dass die erste Pufferbahn 32 auch mit einem größeren Abstand relativ zur Abzugsbahn 30 angeordnet sein könnte, indem entsprechende Fördertechnikbrücken zwischen den Bahnen 30 und 32 angeordnet werden.

Die Abzugsbahn 30 weist beispielsweise an ihrem stromaufwärts gelegenen Ende eine erste Einschleusrichtung 36 auf, um Waren von der Abzugsbahn 30 in die erste Pufferbahn 32 einschleusen zu können. Die Einschleuseinrichtung 36 ist in der Fig. 2 mithilfe eines dunklen vertikalen Pfeils angedeutet. Es versteht sich, dass die Einschleuseinrichtung 36 auch außerhalb, z.B. vor den Bahnen, angeordnet sein könnte.

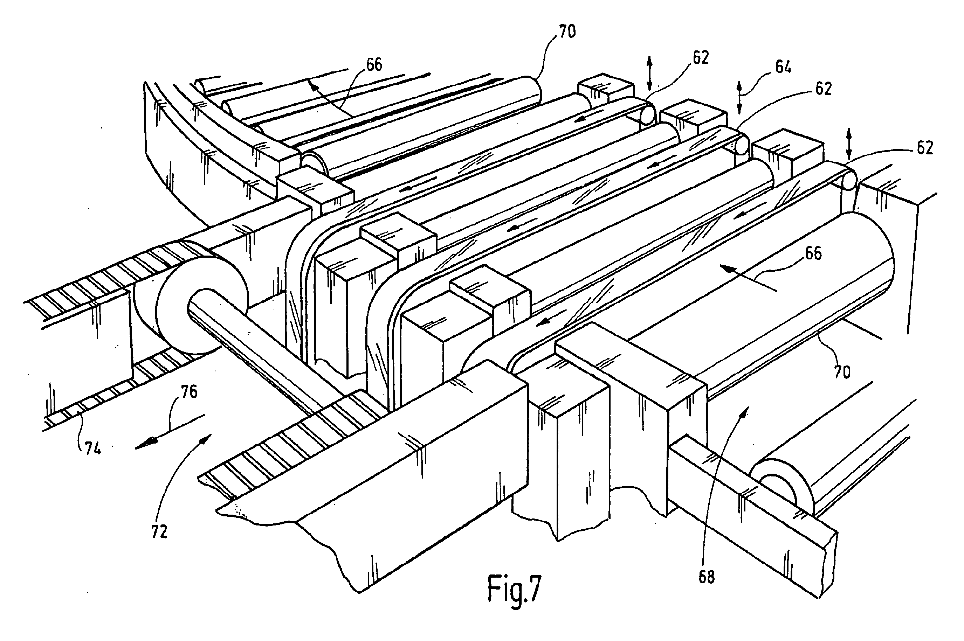

Eine weitere Einschleuseinrichtung befindet sich am stromabwärts gelegenen Ende der Abzugsbahn 30 und ist ebenfalls mithilfe eines dunklen vertikalen Pfeils verdeutlicht. Die Einschleuseinrichtung 36' dient zum Einschleusen von Waren von der Äbzugsbahn 30 in die zweite Pufferbahn 34. Als Einschleuseinrichtungen 36, 36' können zum Beispiel Pusher, vertikal heb- und senkbare Riemenausschleuser (vgl. Fig. 7), Rollenfelder, etc. eingesetzt werden. Die Bahnen 30, 32 und 34 weisen Fördermittel, wie zum Beispiel Gurtbänder, Motorrollen, Ketten oder Ähnliches auf, um die Waren in einer vorgegebenen Richtung transportieren zu können. Die Bahnen können dabei aus einem oder mehreren Teilen gebildet sein. In der nachfolgenden Beschreibung werden exemplarisch endlos umlaufende Gurtbänder als Fördermittel für die Bahnen eingesetzt. Schraffierte Pfeile deuten Material- bzw. Warenflussrichtungen an. Die Abzugsstrecke 30 befördert Waren stromabwärts. Gleiches gilt für das Gurtband der ersten Pufferbahn 32. Die zweite Pufferbahn 34 fördert Waren in einer entgegengesetzten Richtung, d.h. stromaufwärts. Die stromaufwärts gerichtete Förderrichtung ist durch die Anordnung der zweiten Einschleuseinrichtung 36' und der Ausschleuseinrichtung 40 bedingt. Die Einschleuseinrichtung 36' und die Ausschleuseinrichtung 40 könnten ihren Platz problemlos tauschen, so dass die zweite Pufferbahn 34 dann in einer stromabwärts gerichteten Richtung betrieben würde.

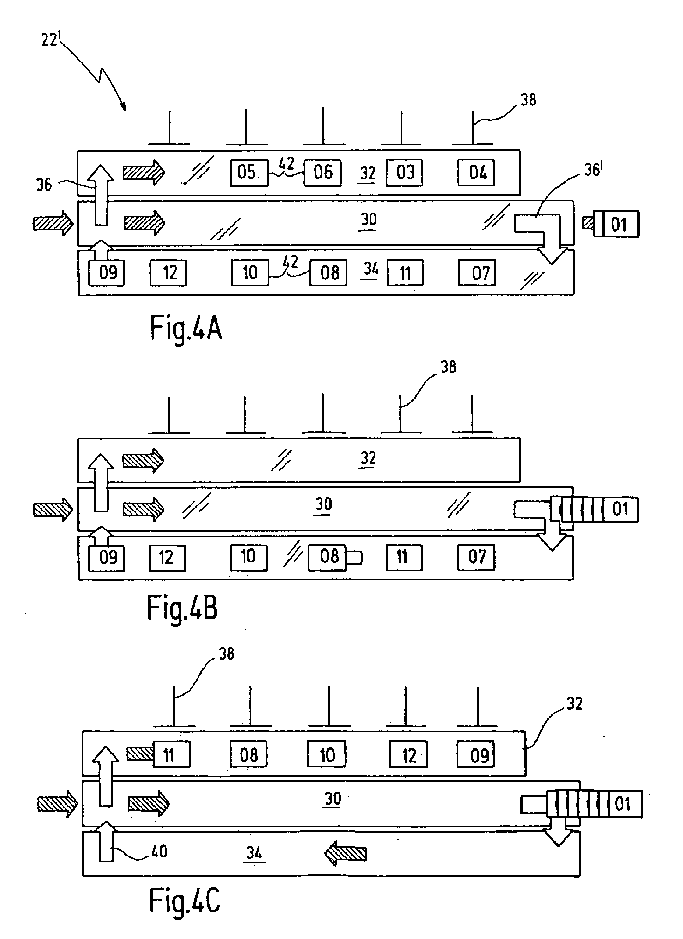

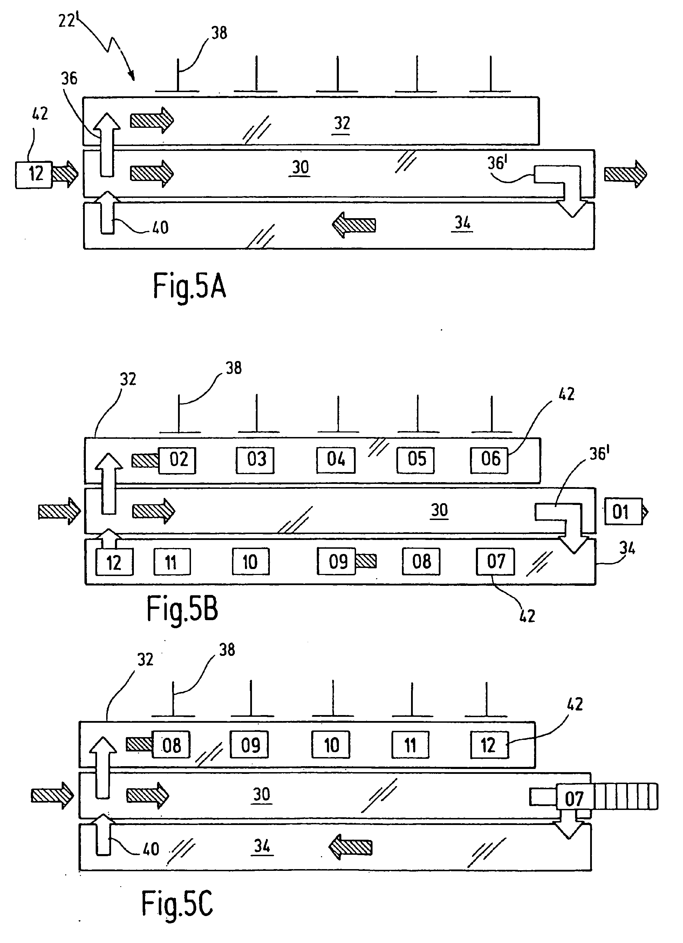

Ferner sind der ersten Pufferbahn 32 eine Vielzahl - hier fünf - von Transfereinrichtungen 38 zugeordnet. Bei den Transfereinrichtungen 38 kann es sich beispielsweise um pneumatisch betätigte Schieber handeln, die so relativ zur ersten Pufferbahn 32 angeordnet sind, dass Waren, die auf Pufferplätzen 39 stehen, von der ersten Pufferbahn 32 auf die Abzugsbahn 30 geschoben werden können. Die Pufferplätze 39 sind in der Fig. 2 mithilfe von Strichlinien angedeutet und sind den stationären Transfereinrichtungen 38 zugeordnet. Die Transfereinrichtungen 38 der Fig. 2 dienen zum Überführen von einzelnen Waren von der ersten Pufferbahn 32 auf die Abzugsbahn 30. Es versteht sich, dass die geometrische Größe der Pufferplätze 39 frei wählbar ist. Die Pufferplätze 39 könnten zum Beispiel so groß gewählt werden, dass jeweils zwei Waren von ein und demselben Schieber 38 auf die Abzugsbahn 30 geschoben werden könnten. Dies setzt jedoch voraus, dass diese beiden Waren auf dem dementsprechenden Pufferplatz 39 bereits in der richtigen Reihenfolge vorliegen. Nähere Ausführungen zur "richtigen" (geordneten) und zur "falschen" (ungeordneten) Reihenfolge werden insbesondere unter Bezugnahme auf die Figuren 4 und 5 noch gegeben werden.

Auch die Transfereinheiten 38 können unterschiedlich groß dimensioniert sein. Zwei benachbarte Schieber 38 könnten zum Beispiel durch einen doppelt so großen einzelnen Schieber ersetzt werden, wobei man dann die Fähigkeit verlieren würde, einzelne Waren auf die Abzugsbahn 30 schieben zu können. Somit wäre es dann wiederum erforderlich, dass die beiden auszuschiebenden Waren in der richtigen Reihenfolge vorliegen.

In der Fig. 2 ist mit einem durch eine Strichlinie umrandeten Rechteck eine kleinste Einheit der vorliegenden Erfindung gezeigt. Ein Versandpuffer gemäß der vorliegenden Erfindung weist zumindest eine Pufferbahn auf. Es können jedoch beliebig weitere Pufferbahnen vorgesehen werden. Die in der Fig. 2 gezeigte zweite Pufferbahn 34 grenzt längs an die Abzugsbahn 30 an. Alternativ könnte die zweite Pufferbahn 34 aber auch längs an die freie Längsseite der ersten Pufferbahn 32 angrenzen. In diesem Fall könnten zum Beispiel höhenverstellbare Kammschieber zum Überführen der Waren von der ersten Pufferbahn 32 auf die Abzugsbahn 30 eingesetzt werden.

Bezug nehmend auf Fig. 3 ist eine zweite Ausführungsform eines Versandpuffers 22" gemäß der Erfindung gezeigt. Der Versandpuffer 22" unterscheidet sich vom Versandpuffer 22' der Fig. 2 dadurch, dass eine weitere (dritte) Pufferbahn 34' an die zweite Pufferbahn 34 angrenzt. Des Weiteren ist im Bereich des stromabwärts gelegenen Endes der zweiten Pufferbahn 34 eine weitere Einschleuseinrichtung 36" vorgesehen, um Waren von der zweiten Pufferbahn 34 in die dritte Pufferbahn 34' einschleusen zu können. Analog ist an einem stromaufwärts gelegenen Ende der dritten Pufferbahn 34' eine Ausschleuseinrichtung 40' vorgesehen, um Waren von der dritten Pufferbahn 34' auf die zweite Pufferbahn 34 ausschleusen zu können. Durch die dritte Pufferbahn 34' erhöht sich die Speicherkapazität des Versandpuffers 22" im Vergleich zu der Speicherkapazität des Versandpuffers 22' der Fig. 2, und zwar um die Pufferplätze der dritten Pufferbahn 34'. Eine optionale Bahnwechseleinrichtung ist in Form einer Strichlinie zwischen der zweiten und der dritten Pufferbahn gezeigt. Mit der Bahnwechseleinrichtung kann die Reihenfolge der Waren in dem Kreisel, den die zweite und dritte Pufferbahn bilden, geändert werden.

In den Figuren 4a bis 4c ist ein Speicher- und Sortiervorgang mit dem Versandpuffer 22' der Fig. 1 gezeigt, wobei zwölf Waren 42, die chaotisch an die Abzugsbahn 30 geliefert werden, in eine geordnete Reihenfolge zu bringen sind.

Die Abzugsbahn 30 weist die gleiche geometrische Länge wie die zweite Pufferbahn 34 auf. Die zweite Pufferbahn 34 umfasst hier exemplarisch sieben Pufferplätze. In der Fig. 4a wurden bereits sechs Waren 42 in die zweite Pufferbahn 34 eingeschleust. Die Waren 42 sind in den Figuren 4a bis 4c von "01" bis "12" durchnummeriert. In Fig.4a befinden sich die Waren mit den Nummern "9", "12", "10", "08", "11" und "07" auf der zweiten Pufferbahn 34. Die Waren 42 mit den Nummern "05", "06", "03" und "04" wurden mithilfe der Einschleuseinrichtung 36 in die erste Pufferbahn 32 eingeschleust. Die Waren 42 mit den Nummern "01" und "02" wurden bereits an einem Übergabepunkt 41 (vgl. Fig. 2) in Richtung einer Versandstelle abgegeben, was in der Fig. 4a dadurch gekennzeichnet ist, dass die Waren "01" und "02" rechts außerhalb der Abzugsbahn 30 dargestellt sind.

In den Figuren 4a bis 4c besteht eine Warensendung bzw. eine Charge von Waren 42 aus insgesamt zwölf Waren 42. Diese zwölf Waren 42 wurden von einem übergeordneten Steuerungssystem, zum Beispiel einem Lagerverwaltungsrechner, aus dem Lagerbereich 12 bis 16 (vgl. Fig. 1) geholt und an den Versandpuffer 22' geliefert. Die Anlieferung ist in einer chaotischen Reihenfolge erfolgt. Die Waren 42 sollen aber aufsteigend von der Ware "01" zur Ware "12" vom Versandpuffer 22' abgegeben werden.

Da der Versandpuffer 22' über drei Bahnen (eine Abzugsbahn und zwei Pufferbahnen) verfügt, ist es ratsam, die Warensendung zumindest in zwei Teile bzw. Segmente aufzuteilen. Im Beispiel der Fig. 4a wurde die Warensendung in zwei Segmente aufgeteilt. Das erste Segment umfasst die Waren "01" bis "06". Das zweite Segment umfasst die Waren "07" bis "12". Dem ersten Segment wird die erste Pufferbahn 32 zugewiesen. Dem zweiten Segment wird die zweite Pufferbahn 34 zugewiesen.

Wenn die Waren 42 der Warensendung nun chaotisch an die Abzugsbahn 30 geliefert werden, so hat die übergeordnete Steuereinrichtung entweder bereits Kenntnis von der - ungeordneten - Reihenfolge, mit der die Waren an die Abzugsbahn 30 geliefert werden, oder es wird eine Erfassungseinrichtung stromaufwärts zur Abzugsbahn 30 vorgesehen, die die Reihenfolge der angelieferten Waren 42 bestimmt. Je nach zugeordnetem Segment wird eine Ware 42 dann entweder in die erste Pufferbahn 32 oder die zweite Pufferbahn 34 geschleust. Waren 42, die bereits in der richtigen Reihenfolge an die Abzugsbahn 30 geliefert werden, können, wie die Waren "01" und "02" in Fig. 4a, direkt am Übergabepunkt in Richtung einer Versandstelle abgegeben werden.

Bezug nehmend auf Fig. 4b ist der Versandpuffer 22' der Fig. 4a zu einem späteren Zeitpunkt gezeigt. Die Waren "05", "06", "03" und "04" sind in der richten Reihenfolge mithilfe der Transfereinrichtungen bzw. Schieber 38 von der ersten Pufferbahn 32 auf die Abzugsbahn 30 (zurück-)geschoben worden. Dies ist in der Fig. 4b dadurch angedeutet, dass die Waren "01" bis "06" am rechten Rand der Abzugsbahn 30 übereinander gestapelt gezeigt sind.

Um nun auch die restlichen Waren "07" bis "12" in der richtigen Reihenfolge in Richtung einer Versandstelle abgeben zu können, werden diese Waren 42 von der zweiten Pufferbahn 34 über die Ausschleuseinrichtung 40 auf die Abzugsbahn 30 bewegt. Von dort werden sie mithilfe der Einschleuseinrichtung 36 in die erste Pufferbahn 32 eingeschleust und dann durch das Gurtband stromabwärts vor die Schieber 38 bewegt.

Die Ware "07", die in der Fig. 4b auf dem hintersten Pufferplatz der zweiten Pufferbahn 34 stand, wurde direkt über die Abzugsbahn 30 abgezogen. Anschließend werden die Waren "08" bis "12" mit aufsteigender Nummer durch die Schieber 38 von der ersten Pufferbahn 32 auf die Abzugsbahn 30 ausgeschoben. Vorn dort werden die Waren 42 dann in Richtung der Versandstelle befördert, was in der Fig. 4c nicht mehr gezeigt ist.

Bezug nehmen auf die Figuren 5a bis 5c ist ein "Worst-Case"-Szenario skizziert. Der eingesetzte Versandpuffer 22' unterscheidet sich nicht von dem Versandpuffer 22' der Figuren 4a bis 4c. Die Warensendung umfasst wiederum 12 Artikel "01 bis "12", die mit aufsteigender Nummer (richtige Reihenfolge) in Richtung einer nicht dargestellten Versandstelle abzugeben bzw. abzuziehen sind. Wie in Fig. 5a gezeigt, wird als erstes die Ware "12" an die Abzugsbahn 30 geliefert, die gemäß der Reihenfolge bekanntlich erst als Letztes von der Abzugsbahn 30 in Richtung der Versandstelle abzugeben ist. Ferner wird im Beispiel der Figuren 5a bis 5c davon ausgegangen, dass die Ware "01" der Warensendung als Letztes an die Abzugsbahn 30 geliefert werden wird.

Dies bedeutet, dass nahezu alle Waren 42 der Warensendung auf den Pufferbahnen 32 und 34 gespeichert werden müssen, bevor sie abgezogen werden können. Dies ist in Fig. 5b gezeigt. Die Ware "01" wurde als Letztes an die Abzugsbahn 30 geliefert. In der Fig. 5b wurde die Ware "01" dann direkt in Richtung der Versandstelle weitergeleitet.

Die Warensendung wurde dabei wieder in zwei Segmente unterteilt, da zwei Pufferbahnen zur Verfügung stehen. Es hat sich als vorteilhaft herausgestellt, wenn die Anzahl der Segmente um eins geringer ist als die Anzahl der insgesamt vorgesehenen Bahnen des Puffers. In den Beispielen der Figuren 4 und 5 sind drei Bahnen vorgesehen, so dass zwei Segmente gut handhabbar sind. Wie in Fig. 5b gezeigt, können dadurch alle Waren 42 der Warensendung vorerst auf eine der Pufferbahnen 32 oder 34 bewegt werden. Das Einschleusen in die Pufferbahnen 32 oder 34 stellt eine erste Sequenzierungsstufe dar. Die zweite Sequenzierungsstufe wird durch die Schieber 38 implementiert. Mithilfe der Schieber 38 können die Waren "02" bis "06", die auf der ersten Pufferbahn 32 auf jeweils einem Pufferplatz stehen, in der richtigen Reihenfolge auf die Abzugsbahn 30 geschoben werden.

Sobald die Waren "02" bis "06" von der ersten Pufferbahn 32 an die Abzugsbahn 30 abgegeben wurden und in Richtung Versand transportiert sind, werden die Waren "07" bis "12", die auf der zweiten Pufferbahn 34 geparkt sind, auf die erste Pufferbahn 32 bewegt. Dies ist in Fig. 5c gezeigt, wobei die Ware "07" ähnlich wie bei der Fig. 4c bereits direkt in Richtung der Versandstelle transportiert wurde. Anschließend können die Waren "08" bis "12" gemäß der gewünschten Reihenfolge mittels der Schieber 38 auf die Abzugsbahn 30 geschoben werden, von wo sie in der richtigen Reihenfolge in Richtung der Versandstelle befördert werden, wie es wieder durch die schraffierten Pfeile angedeutet ist.

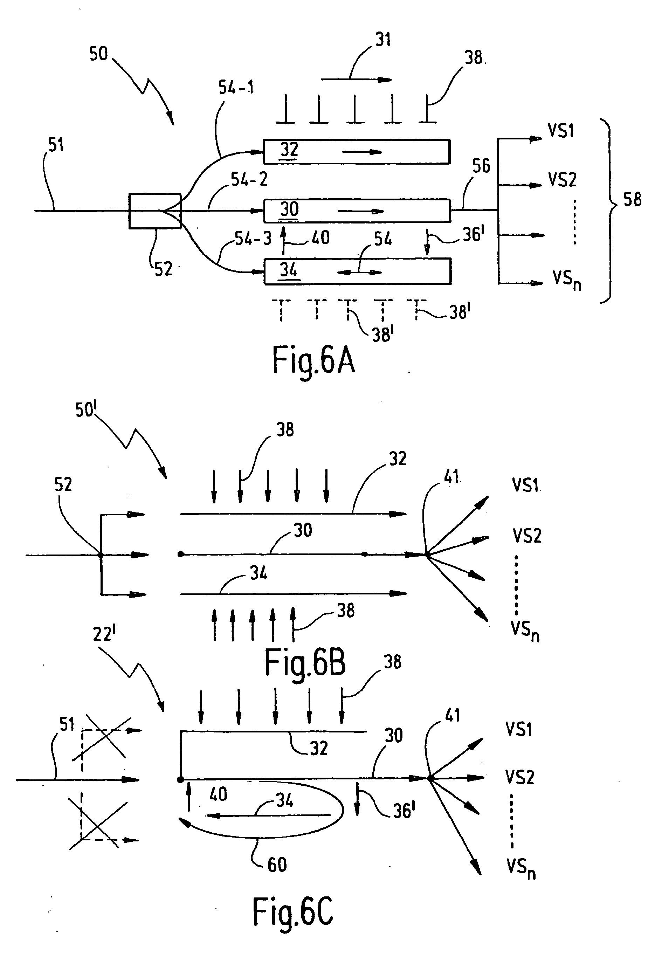

Bezug nehmend auf die Figuren 6a bis 6b sind Materialflussdiagramme zu einer weiteren Ausgestaltung eines erfindungsgemäßen Versandpuffers 50 (Figuren 6a und 6b) bzw. der Versandpuffer 22' (Fig. 6c) der Figuren 4 und 5 gezeigt.

Der Versandpuffer 50' der Fig. 6a unterscheidet sich von dem Versandpuffer 22' der Figuren 4 und 5 dadurch, dass die Waren direkt in die Bahnen 30, 32 und 34 geleitet werden. In den Figuren 4 und 5 wurden die Waren 42 über die Abzugsbahn 30 den Pufferbahnen zugeführt.

In der Fig. 6a ist den Bahnen 30, 32 und 34 eine Fördertechnikweiche 52 vorgeschaltet. Waren 42 werden generell über eine Fördertechnik 51 zum Beispiel vom Lagerbereich (vgl. Fig. 1) in Richtung des Versandpuffers 50 transportiert. Die Weiche 52 lenkt die ungeordneten Waren 42 in die ihnen zugeordnete Bahn 30, 32 oder 34. Wie zuvor wurden die Waren 42 einer Warensendung in Segmente unterteilt, die wiederum jeweils einer der Bahnen zugeordnet wurden. Zwischen der Weiche 52 und den Bahnen 30, 32 und 34 sind Fördertechnikabschnitte 54-1, 54-2 und 54-3 vorgesehen, um die Fördertechnik 51 jeweils separat an eine der Bahnen 30, 32 bzw. 34 zu koppeln. Am stromabwärts gelegenen Ende der Abzugsbahn 30 schließt eine weitere Fördertechnik 56 an, über die die Warensendung in der geordneten Reihenfolge an eine Vielzahl 58 von Versandstellen VS1, VS2, ..., VSn (n ist beliebig wählbar) mit Warensendungen in geordneter Reihenfolge versorgt werden können. Es versteht sich, dass generell beliebig viele Pufferbahnen eingesetzt werden können.

In der Fig. 6a sind seitlich, unterhalb der zweiten Pufferbahn 34 weitere, optionale Transfereinrichtungen 38' durch Strichlinien angedeutet.

In Fig. 6b ist der Versandpuffer 50 der Fig. 6a in abgewandelter Form 50' gezeigt. Die Transfereinrichtungen 38, 38' sind sowohl seitlich zur ersten Pufferbahn 32 als auch seitlich zur zweiten Pufferbahn 34 angeordnet. Die Pufferbahnen 32 und 34 werden hier nur stromabwärts betrieben. Die Einschleuseinrichtung 36' sowie die Ausschleuseinrichtung 40' zwischen der Abzugsbahn 30 und der zweiten Pufferbahn 34 wurden eingespart. Deshalb fördert die zweite Pufferbahn 34 der Fig. 6b auch nur noch stromabwärts, im Gegensatz zur zweiten Pufferbahn 34 der Fig. 6a, die in beiden Richtungen betätigt werden kann, wie es durch einen Doppelpfeil 54 in der Fig. 6a dargestellt ist.

Mit den Schiebern 38, 38' können Waren 42 von den Pufferbahnen 32 und 34 auf die Abzugsbahn 30 geschoben werden. Die Waren 42 werden dann stromabwärts in Richtung des Übergabepunkts 41 befördert, von wo sie auf die Versandstellen VS1, ...., VSn verteilt werden.

In Fig. 6c ist der Materialfluss beim Arbeitsplatz 22' der Figuren 4 und 5 nochmals gezeigt. Im Vergleich zum Versandpuffer 50' der Fig. 6 fehlen die Weiche 52 sowie die Fördertechnikabschnitte 54. Die Waren 42 werden direkt an die Abzugsbahn 30 abgegeben. Die Abzugsbahn 30, die Einschleuseinrichtung 36', die zweite Pufferbahn 34 und die Ausschleuseinrichtung 40 bilden einen Fördertechnikkreisel 60.

In Fig. 7 ist eine perspektivische Ansicht einer Ein- bzw. einer Ausschleuseinrichtung in Form eines Riemenausschleusers gezeigt.

Der Riemenausschleuser weist hier drei Riemen 62 auf, die gegenüber einem Rollenförderer 68, der in einer Hauptförderrichtung 66 betrieben wird, angehoben und abgesenkt werden können, wie es durch einen Doppelpfeil 64 angedeutet ist. Der Rollenförderer 68 besteht aus einer Vielzahl von Rollen 70. In einem Zwischenraum zwischen benachbarten Rollen 70 sind die Riemen 62 angeordnet, um eine Ware seitlich vom Rollenförderer 68 transportieren zu können. Es versteht sich, dass die in den vorhergehenden Figuren gezeigten Bahnen beispielsweise in Form von Rollenförderern implementiert sein können. Ein- und Ausschleuseinrichtungen können in Form eines Riemenausschleusers implementiert sein, wie er in Fig. 7 gezeigt ist.

Der Riemenausschleuser der Fig. 7 schließt hier exemplarisch an einen Kettenförderer 72 an, der zwei parallel zueinander beabstandete Kettenantriebe 74 aufweist, die in Richtung eines Pfeils 76 (parallel zum Riemenausschleuser) betrieben werden.

Der Riemenausschleuser der Fig. 7 kann auch als Weiche 52 (vgl. Figuren 6) verwendet werden, wenn die endlos umlaufenden Riemen 62 in beide Richtungen antreibbar sind.

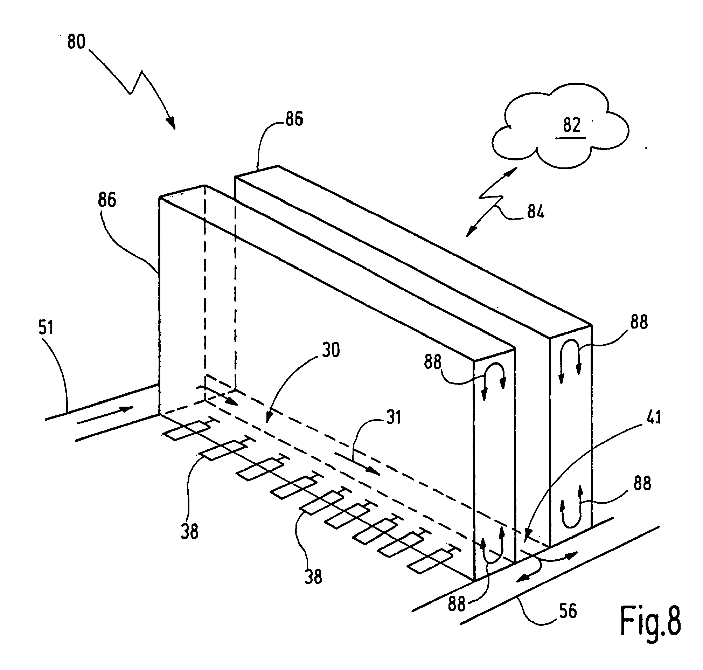

Bezug nehmend auf Fig. 8 ist eine weitere, besonders vorteilhafte Ausführungsform eines Versandpuffers 80 gemäß der vorliegenden Erfindung gezeigt. Fig. 8 stellt eine perspektivische Darstellung einer Abzugsbahn 30 dar, die zentral zu zwei "Pufferbahnen" angeordnet ist, die hier in Form von Vertikalumlaufregalen 86 implementiert sind. Des Weiteren ist in der Fig. 8 ein übergeordneter Lagerverwaltungsrechner bzw. ein Materialflussrechner 82 in Form einer Wolke angedeutet. Der Rechner 82 kommuniziert mit den einzelnen Fördertechnikelementen (Bahnen, Weichen, Schieber, Einschleuser, Ausschleuser, Umlaufregale, etc.) über eine Datenverbindung 84, insbesondere um den Warenfluss zu beeinflussen. Die Datenverbindung 84 kann drahtlos oder über feste Verbindungen, wie zum Beispiel ein Bussystem, erfolgen. Die vertikalen Umlaufregale 86 können in beiden Richtungen vertikal umlaufen (vgl. Pfeile 88).

Bezug nehmend auf Fig. 9 ist eine Seitenansicht von einem der Vertikalumlaufregale 86 gezeigt.

Das Vertikalumlaufregal 86 weist eine Vielzahl von Regalfächern 90 auf, von denen in der Fig. 9 lediglich drei zu sehen sind. Die Regalfächer sind an ihren seitlichen Enden beispielsweise an endlos in vertikaler Richtung umlaufenden Ketten befestigt, um die Durchlaufbewegungen 88 durchführen zu können. Die Regalfächer sind hier in Form von endlos in horizontaler Richtung umlaufenden Gurtbändern realisiert, die an ihren Enden um Umlenkrollen 94 gelenkt werden. Zwischen den Umlenkrollen 94 sind hier nicht dargestellte Stabilisierungselemente vorgesehen, um ein Durchhängen des Gurtbands 92, insbesondere in der Mitte, zu verhindern.

Die drei Regalfächer 90 der Fig. 9 entsprechen jeweils einer Pufferbahn, wie sie bei den horizontalen Ausführungen des erfindungsgemäßen Versandpuffers 22' bzw. 50 gezeigt sind (vgl. Figuren 2 bis 6). Das oberste Regalfach 90 der Fig. 9 ist einer Warensendung bzw. einem Segment "A" zugeordnet. Die Warensendung "A" besteht hier aus drei Waren 42. Die Warensendung "A" ist komplett, da die drei Waren "A1", "A2" und "A3" bereits im Regalfach 90 gepuffert sind. Die Warensendung "A" ist somit zum Abtransport durch einen LKW bereit. Möglicherweise muss dieser LKW jedoch noch weitere Warensendungen mitnehmen, so dass die Warensendung "A" vorerst im Versandpuffer verbleibt. Es versteht sich, dass die Waren "A1" bis "A3" relativ zum Regalfach 90 nicht zwingend in der richtigen Reihenfolge vorliegen müssen. Durch das Ausschieben der Waren 42 auf die Abzugsbahn können diese in die richtige Reihenfolge verbracht werden, wie es bereits im Zusammenhang mit den Figuren 4 und 5 beschrieben wurde. Die Ausschieber 38 sind in der Fig. 9 des untersten Regalfachs angeordnet. Es versteht sich, dass die Ausschieber 38 auch auf einer anderen Höhe relativ zum Umlaufregal 86 angeordnet sein können. In der Fig. 8 ist die Abzugsbahn 30 am Boden angeordnet, so dass die Ausschieber 38 der Umlaufregale 86 in der ersten Ebene anzuordnen sind. Je nach Gebäudevorgabe können sich die Umlaufregale 86 jedoch unter die Abzugsbahn 30 erstrecken, so dass die Schieber 38 dann zum Beispiel in der Mitte des Regals 86 anzuordnen sind.

Das mittlere Regalfach 90, das der Warensendung "D" zugeordnet ist, wartet noch auf die restlichen zwei Waren "D1" und "D2". Da das Gurtband 92 in beiden Richtungen betätigbar ist, kann die Ware "D3" auf einen beliebigen Pufferplatz bewegt werden. In der Fig. 9 ist die Ware "D3" auf den am weitesten links gelegenen Pufferplatz der insgesamt drei Pufferplätze des Regalfachs 90 bewegt worden.

Das unterste Regalfach 90 der Fig. 9 ist der Warensendung "G" zugeordnet, von der bisher nur die Ware "G2" gepuffert ist.

Aus den Figuren 8 und 9 ist das große Potenzial der vorliegenden Erfindung leicht erkennbar. Viele Warensendungen können auf kleinster Stellfläche gespeichert und sortiert werden. Das System der vorliegenden Erfindung ist beliebig erweiterbar. Die Umlaufregale 86 können in der Höhe, in der Länge sowie in ihrer Anzahl erweitert werden.

Wie in Fig. 8 gezeigt, werden am Übergabepunkt 41 die Waren in der geordneten Reihenfolge an die Fördertechnik 56 abgegeben, die wiederum die Waren dann an die Versandstellen VSn liefert, die relativ zum Versandpuffer 80 weiter entfernt angeordnet sein können. Natürlich kann der Übergabepunkt 41 auch direkt an eine einzige Versandstelle ankoppeln, so dass Waren in der geordneten Reihenfolge direkt in einen LKW 24 (vgl. Fig. 1) geladen werden können. In diesem Fall würde man auf die Fördertechnik 56 verzichten. Der Einsatz von Vertikalliften im Bereich des Übergabepunkts 41 ist ebenfalls möglich.

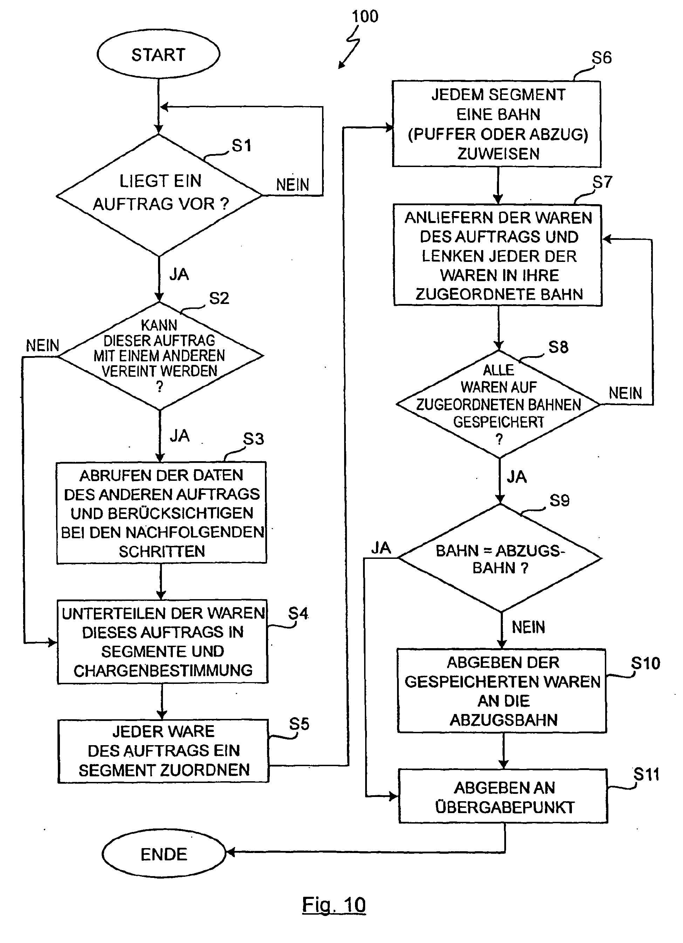

Bezug nehmend auf Fig. 10 ist ein Verfahren zum Vorbereiten einer Warensendung gemäß der vorliegenden Erfindung veranschaulicht.

In einem ersten Schritt S1 wird abgefragt, ob ein Auftrag abzuarbeiten ist, bzw. ob ein Auftrag vorliegt. Liegt kein Auftrag vor, so ist für die Steuereinrichtung 82 nichts zu tun. Liegt jedoch ein Auftrag vor, so prüft die Steuereinrichtung 82, ob der vorliegende Auftrag mit einem bereits existierenden Auftrag vereint werden kann (Schritt S2). Dies ist in solchen Fällen sinnvoll, wenn mehrere Aufträge in ein und denselben LKW 24 zu laden sind. Dabei ist es nicht erforderlich, dass die Aufträge von der gleichen Filiale stammen. Der Laster 24 kann auch mehrere Filialen auf einer Fahrt versorgen.

Wenn bei der Abfrage in Schritt S2 festgestellt wird, dass der vorliegende Auftrag mit einem anderen Auftrag vereint werden kann, dann werden in einem Schritt S3 die Daten des anderen Auftrags abgerufen und bei der Abarbeitung der nachfolgenden Schritte (Sortieren der Waren und Abziehen der Waren in Richtung des LKW) berücksichtigt.

Wenn der Auftrag jedoch isoliert abzuarbeiten ist, dann werden die Waren in einem Schritt S4 in Segmente unterteilt, die alle zur gleichen Charge bzw. Warensendung gehören, wie es zuvor bereits beschrieben wurde.

In einem Schritt S5 wird jeder Ware eines Auftrags ein Segment zugeordnet.

In einem Schritt S6 bekommt jedes Segment eine Bahn (Pufferbahn oder Abzugsbahn, vorzugsweise aber Pufferbahn) zugewiesen.

In einem Schritt S7 werden die Waren dann in Richtung der Abzugsbahn 30 transportiert und entweder am Eingang der Abzugsbahn 30 oder bereits davor in die ihnen zugeordnete Bahn gelenkt.

Danach wird abgefragt, ob alle Waren eines Segments auf der ihnen zugeordneten Bahn gespeichert sind (Schritt S8). Wenn noch nicht alle Waren vorliegen, so kehrt man zum Schritt S7 zurück. Liegen alle Waren vor, so wird in einem Schritt S9 bahnweise abgefragt, ob die gerade betrachtete Bahn der Abzugsbahn 30 entspricht.

Wenn die betrachtete Bahn nicht die Abzugsbahn 30 ist, so wird in einem Schritt S10 der Inhalt der gerade betrachteten Bahn an die Abzugsbahn 30 abgegeben. Beispielsweise gibt die erste oder zweite Pufferbahn 32 bzw. 34 die auf ihr- gespeicherten Waren 42 an die Abzugsbahn 30 ab. Ist die gerade betrachtete Bahn jedoch die Abzugsbahn selbst, so werden in einem Schritt S11 alle auf der Abzugsbahn 30 befindlichen Waren an den Übergabepunkt 41 abgegeben (Schritt S11).

Vom Übergabepunkt 41 werden die Waren dann in der geordneten Reihenfolge an die Versandstellen VSn verteilt. Die LKW 24 sind dann in der richtigen Reihenfolge beladen. Das Verfahren ist dann abgeschlossen.

## Patentansprüche

1. Skalierbarer Versandpuffer (22; 50; 88) mit integrierter Sortierfunktion zum Vorbereiten einer aus mehreren verschiedenen Waren (42) bestehenden Sendung, wobei die Waren (42) in einer geordneten Reihenfolge in ein Transportfahrzeug (24) zu laden sind und wobei die Waren (42) in einer ungeordneten Reihenfolge an den Versandpuffer (22; 50; 88) geliefert werden, mit:
einer, insbesondere zentralen, Abzugsbahn (30) zum stromabwärtsgerichteten Fördern der Waren (42) an einen Übergabepunkt (41), an welchem die Waren (42) gemäß der geordneten Reihenfolge in Richtung eines Transportfahrzeugs (24) übergeben werden, wobei sich die Abzugsbahn (30) im Wesentlichen in einer Längsrichtung (31) erstreckt;
einer ersten Pufferbahn (32; 34), die sich im Wesentlichen parallel zu und angrenzend an die Abzugsbahn (30) erstreckt und die eine erste Anzahl von Pufferplätzen (39) aufweist;
einer Vielzahl von Transfereinrichtungen (38), wobei die Transfereinrichtungen derart angeordnet sind, dass jedem Pufferplatz (39) der ersten Pufferbahn zumindest eine Transfereinrichtung (38) für eine Überführung von einer oder mehreren Waren (42) von der ersten Pufferbahn (32) auf die Abzugsbahn (30) zugeordnet ist;
einer Einschleuseinrichtung (36; 52), die derart angeordnet ist, dass die Waren (42), die der Abzugsbahn (30) in der ungeordneten Reihenfolge zugeführt werden, in die erste Pufferbahn (32) einschleusbar sind; **dadurch gekennzeichnet, dass**
einer zweiten Pufferbahn (34), die sich parallel zur Abzugsbahn (30) erstreckt und die entweder an die Abzugsbahn (30) angrenzt oder die an die erste Pufferbahn (32) angrenzt, wobei die Waren (42) auf der zweiten Pufferbahn in entgegengesetzter Richtung relativ zur ersten Pufferbahn (32) und der Abzugsbahn (30) bewegbar sind;
einer zweiten Einschleuseinrichtung (36'; 36"), die derart angeordnet ist, dass Waren (42) von der Abzugsbahn (30) bzw. der ersten Pufferbahn (34) in die zweite Pufferbahn (34') eingeschleust werden können; und
einer Ausschleuseinrichtung (40; 40'), die angeordnet ist, um die Waren (42), die sich auf der zweiten Pufferbahn (34; 34') befinden, auf die Abzugsbahn (30) bzw. die erste Pufferbahn (34) auszuschleusen.

2. Versandpuffer nach Anspruch 1, wobei die zweite Einschleuseinrichtung (36'; 36") an einem stromabwärts gelegenen Ende der Abzugsbahn (30) bzw. der ersten Pufferbahn (34) angeordnet ist und wobei die Ausschleusrichtung (40; 40') an einem stromaufwärts gelegenen Ende der zweiten Pufferbahn (34; 34') angeordnet ist.

3. Versandpuffer nach einem der vorhergehenden Ansprüche, wobei bei jedem Pufferplatz (39) von zumindest der ersten Pufferbahn (32) eine Transfereinrichtung (38) vorgesehen ist.

4. Versandpuffer nach den Ansprüchen 1 und 3, wobei die zweite Pufferbahn (34) mit ihrer Längsseite parallel an die Abzugsbahn (30) angrenzt und eine zweite Anzahl von Pufferplätzen aufweist, wobei jedem Pufferplatz der zweiten Pufferbahn eine Transfereinrichtung (38') zugeordnet ist.

5. Versandpuffer nach einem der vorhergehenden Ansprüche, wobei weitere Pufferbahnen (34') mit jeweiligen weiteren Einschleuseinrichtungen (36") und weiteren Ausschleuseinrichtungen (40') vorgesehen sind.

6. Versandpuffer nach Anspruch 5, wobei aneinander grenzende Pufferbahnen (34, 34') zumindest eine Bahnwechseleinrichtung (37) aufweisen, die es den Waren (42) erlauben, räumlich zwischen der Einschleusrichtung (36") und der Ausschleuseinrichtung (40') einer Pufferbahn (34') auf die angrenzende Pufferbahn (34) zu wechseln.

7. Versandpuffer nach einem der vorhergehenden Ansprüche, wobei die Bahnen (30, 32, 34, 34') alle annähernd eine gleiche geometrische Länge aufweisen.

8. Versandpuffer nach einem der vorhergehenden Ansprüche, wobei die Bahnen (30, 32, 34, 34') angetriebene Fördermittel aufweisen, um die Waren (42) in Längsrichtung (31) zu transportieren.

9. Versandpuffer nach einem der vorhergehenden Ansprüche, wobei als Transfereinrichtungen (38) Schieber, die seitlich zur ersten Pufferbahn (32) angeordnet sind, oder höhenbewegliche Riemenausschleuser (62) verwendet werden, wobei der Riemenausschleuser (62) quer zur Längsrichtung (31) einer Bahn (30, 32, 34, 34') orientiert ist und ferner in dafür in der Bahn (30, 32, 34, 34'), die vorzugsweise als Rollenförderer (68) ausgebildet ist, vorgesehenen Ausnehmungen angeordnet ist.

10. Versandpuffer nach einem der vorhergehenden Ansprüche, wobei die Pufferbahn (32; 34; 34') Teil eines Vertikalumlaufregals (86) ist, wobei jedes Regalfach (90) des Umlaufregals (86) ein angetriebenes Fördermittel (92) aufweist, um Waren, die an das Regalfach (90) abgegeben wurden, stromaufwärts und/oder stromabwärts zu fördern, und wobei jedes Regalfach (90) auf Höhe der Abzugsbahn (30) angehalten werden kann, um einen Austausch der Ware (42) zwischen dem Regalfach (90) und der Abzugsbahn (30) zuzulassen.

11. Versandpuffer nach Anspruch 10, wobei mehrere Abzugsbahnen (30) übereinander angeordnet sind, wobei jede Abzugsbahn (30) über eine separate Förderstrecke (51) mit Waren (42) gespeist werden kann.

12. Versandpuffer nach Anspruch 10 oder 11, wobei an einem stromaufwärts gelegenen Ende und/oder an einem stromabwärts gelegenen Ende der Abzugsbahn (30) ein Vertikallift angeordnet ist, um die auf der Abzugsbahn (30) befindlichen Waren (42) an übereinander angeordnete Versandstellen (VS1, ..., VSn) abgeben zu können.

13. Versandpuffer nach einem der Ansprüche 10 bis 12, wobei der Übergabepunkt (41) an eine Versandförderstrecke (56) koppelt, die eine Vielzahl von horizontal nebeneinander angeordneten Versandstellen (VS1, ..., VSn) mit Waren (42) in der geordneten Reihenfolge speisen kann.

## Claims

1. A scalable shipping buffer (22; 50; 88) having an integrated sorting function for preparing a shipment consisting of several different goods (42), wherein the goods (42) are to be loaded in or on a transport vehicle (24) in a sorted sequence and wherein the goods (42) are delivered to the shipping buffer (22; 50; 88) in an unsorted sequence, comprising:
one, particularly centrally arranged, withdrawal line (30) for conveying downstream the goods (42) to a handover point (41) where the goods (42) are handed over towards a transport vehicle (24) in accordance with the sorted sequence, wherein the withdrawal line (30) substantially extends along a longitudinal direction (31);
a first buffer line (32; 34) extending substantially parallel and adjacent to the withdrawal line (30), which comprises a first number of buffer locations (39);
a plurality of transfer devices (38), wherein the transfer devices are arranged such that each buffer location (39) of the first buffer line has assigned at least one of the transfer devices (38) for transferring one or more of the goods (42) from the first buffer line (32) to the withdrawal line (30);
a feed device (36; 52) arranged such that the goods (42), which are supplied to the withdrawal line (30) in the unsorted sequence, can be fed into the first buffer line (32);
a second buffer line (34) extending parallel to the withdrawal line (30) and adjacent to either the withdrawal line (30) or the first buffer line (32), wherein the goods (42) on the second buffer line can be moved oppositely relative to the first buffer line (32) and the withdrawal line (30);
a second feed device (36'; 36") arranged such that the goods (42) from the withdrawal line (30) or the first buffer line (34) can be fed into the buffer line (34'); and
a discharge device (40; 40') being arranged for discharging the goods (42), which are located on the second buffer line (34; 34'), to the withdrawal line (30) or the first buffer line (34).

2. The shipping buffer of claim 1, wherein the second feed device (36'; 36") is arranged at a downstream end of the withdrawal line (30) or the first buffer line (34), and wherein the discharge device (40; 40') is arranged at an upstream end of the second buffer line (34; 34').

3. The shipping buffer of any of the proceeding claims, wherein one transfer device (38) is provided at each of the buffer locations (39) of the at least first buffer line (32).

4. The shipping buffer of the claims 1 and 3, wherein the second buffer line (34) adjoins with the longitudinal side thereof to the withdrawal line (30) in parallel and comprises a second number of buffer locations, wherein each buffer location of the second buffer line has assigned a transfer device (38').

5. The shipping buffer of any of the proceeding claims, wherein additional buffer lines (34') having respectively additional feed devices (36") and additional discharge devices (40') are provided.

6. The shipping buffer of claim 5, wherein buffer lines (34, 34') adjoining each other comprise at least one line-change device (37) which allows the goods (42) to change spatially between the feed device (36") and the discharge device (40') of one of the buffer lines (34') to an adjacent buffer line (34).

7. The shipping buffer of any of the proceeding claims, wherein the lines (30, 32, 34, 34') have an almost identical geometrical length.

8. The shipping buffer of any of the proceeding claims, wherein the lines (30, 32, 34, 34') comprise driven conveyor means for transporting the goods (42) in the longitudinal direction (31).

9. The shipping buffer of any of the proceeding claims, wherein pushers, which are arranged laterally relative to the first buffer line (32), or belt dischargers (62), which are moveable in height, are used as transfer devices (38), wherein the belt dischargers (62) are oriented transversally relative to the longitudinal direction (31) of the lines (30, 32, 34, 34') and are further arranged in recesses of the lines (30, 32, 34, 34'), which preferably are formed as roller conveyors (68).

10. The shipping buffer of any of the proceeding claims, wherein the buffer line (32; 34; 34') is part of a vertical rotary rack (86), wherein each rack compartment (90) of the rotary rack (86) comprises a driven conveyor means (92), for conveying goods, which have been delivered to the rack compartment (90), in an upstream and/or downstream direction, and wherein each of the rack compartments (90) can be stopped at a height of the withdrawal line (30) for causing a transfer of the goods (42) between the rack compartment (90) and the withdrawal line (30).

11. The shipping buffer of claim 10, wherein several withdrawal lines (30) are arranged on top of each other, and wherein each of the withdrawal lines (30) can be fed with the goods (42) via a separate conveyor line (51).

12. The shipping buffer of claim 10 or 11, wherein a vertical elevator is arranged at an upstream end and/or at a downstream end of the withdrawal line (30), in order to allow delivering the goods (42) located on the withdrawal line (30) to shipping locations (VS1, ..., VSn) arranged on top of each other.

13. The shipping buffer of any of the claims 10 to 12, wherein the handover point (41) couples to a shipping conveyor line (56), which can supply a plurality of shipping locations (VS1, ..., VSn) being arranged side-by-side with the goods (42) in the sorted sequence.

## Revendications

1. Accumulateur d'expédition modulable (22; 50; 88) avec fonction de tri intégrée pour la préparation d'un envoi composé de plusieurs marchandises différentes (42), dans lequel les marchandises (42) doivent être chargées en une séquence ordonnée dans un véhicule de transport (24) et dans lequel les marchandises (42) sont fournies en une séquence désordonnée à l'accumulateur d'expédition (22; 50; 88), avec:
une bande de reprise (30), en particulier centrale, pour le transport dirigé vers l'aval des marchandises (42) à un point de transfert (41), auquel les marchandises (42) sont transférées selon la séquence ordonnée en direction d'un véhicule de transport (24), dans lequel la bande de reprise (30) s'étend essentiellement dans une direction longitudinale (31);
une première bande d'accumulateur (32; 34), qui s'étend essentiellement parallèlement à et à proximité de la bande de reprise (30) et qui présente un premier nombre d'emplacements d'accumulateur (39);
une multiplicité de dispositifs de transfert (38), dans lequel les dispositifs de transfert sont agencés de telle manière qu'au moins un dispositif de transfert (38) soit associé à chaque emplacement d'accumulateur (39) de la première bande d'accumulateur pour une transmission d'une ou de plusieurs marchandises (42) de la première bande d'accumulateur (32) à la bande de reprise (30);
un premier dispositif de sas d'entrée (36; 52), qui est agencé de telle manière que les marchandises (42), qui sont fournies à la bande de reprise (30) selon la séquence désordonnée, puissent être insérées dans la première bande d'accumulateur (32);
**caractérisé par**:
u ne deuxième bande d'accumulateur (34), qui s'étend parallèlement à la bande de reprise (30) et qui est adjacente soit à la bande de reprise (30) soit à la première bande d'accumulateur (32), dans lequel les marchandises (42) peuvent être déplacées sur la deuxième bande d'accumulateur en sens contraire par rapport à la première bande d'accumulateur (32) et à la bande de reprise (30);
u n deuxième dispositif de sas d'entrée (36'; 36"), qui est agencé de telle manière que des marchandises (42) puissent être insérées de la bande de reprise (30) ou de la première bande d'accumulateur (34) dans la deuxième bande d'accumulateur (34'); et
u n dispositif de sas de sortie (40; 40'), qui est agencé de façon à faire passer sur la bande de reprise (30) ou sur la première bande d'accumulateur (34) les marchandises (42) qui se trouvent sur la deuxième bande d'accumulateur (34; 34').

2. Accumulateur d'expédition selon la revendication 1, dans lequel le deuxième dispositif de sas d'entrée (36'; 36") est disposé à une extrémité située en aval de la bande de reprise (30) ou de la première bande d'accumulateur (34) et dans lequel le dispositif de sas de sortie (40; 40') est disposé à une extrémité située en amont de la deuxième bande d'accumulateur (34; 34').

3. Accumulateur d'expédition selon l'une quelconque des revendications précédentes, dans lequel il est prévu un dispositif de transfert (38) à chaque emplacement d'accumulateur (39) d'au moins la première bande d'accumulateur (32).

4. Accumulateur d'expédition selon les revendications 1 et 3, dans lequel la deuxième bande d'accumulateur (34) est adjacente par son côté longitudinal parallèlement à la bande de reprise (30) et présente un deuxième nombre d'emplacements d'accumulateur, dans lequel un dispositif de transfert (38') est associé à chaque emplacement d'accumulateur de la deuxième bande d'accumulateur.

5. Accumulateur d'expédition selon l'une quelconque des revendications précédentes, dans lequel il est prévu d'autres bandes d'accumulateur (34') avec d'autres dispositifs de sas d'entrée (36") et d'autres dispositifs de sas de sortie (40') respectifs.

6. Accumulateur d'expédition selon la revendication 5, dans lequel des bandes d'accumulateur (34, 34') adjacentes l'une à l'autre présentent au moins un dispositif de changement de bande (37), qui permet aux marchandises (42) de changer spatialement entre le dispositif de sas d'entrée (36") et le dispositif de sas de sortie (40') d'une bande d'accumulateur (34') à la bande d'accumulateur adjacente (34).

7. Accumulateur d'expédition selon l'une quelconque des revendications précédentes, dans lequel les bandes (30, 32, 34, 34') présentent toutes approximativement une longueur géométrique égale.

8. Accumulateur d'expédition selon l'une quelconque des revendications précédentes, dans lequel les bandes (30, 32, 34, 34') présentent des moyens de transport entraînés, pour transporter les marchandises (42) dans la direction longitudinale (31).

9. Accumulateur d'expédition selon l'une quelconque des revendications précédentes, dans lequel on utilise comme dispositifs de transfert (38) des chariots, qui sont disposés latéralement à la première bande d'accumulateur (32), ou des convoyeurs à courroie (62) mobiles en hauteur, dans lequel le convoyeur à courroie (62) est orienté transversalement à la direction longitudinale (31) d'une bande (30, 32, 34, 34') et est en outre disposé dans des évidements prévus à cet effet dans la bande (30, 32, 34, 34'), qui est de préférence réalisée sous la forme d'un transporteur à rouleaux (68).

10. Accumulateur d'expédition selon l'une quelconque des revendications précédentes, dans lequel la bande d'accumulateur (32; 34; 34') fait partie d'un rayonnage à circulation verticale (86), dans lequel chaque casier (90) du rayonnage à circulation (86) présente un moyen de transport entraîné (92), pour transporter vers l'amont et/ou vers l'aval des marchandises, qui ont été déposées dans le casier (90), et dans lequel chaque casier (90) peut être arrêté à hauteur de la bande de reprise (30) afin de permettre un échange des marchandises (42) entre le casier (90) et la bande de reprise (30).

11. Accumulateur d'expédition selon la revendication 10, dans lequel plusieurs bandes de reprise (30) sont disposées les unes au-dessus des autres, dans lequel chaque bande de reprise (30) peut être alimentée en marchandises (42) par une section de transport séparée (51).

12. Accumulateur d'expédition selon la revendication 10 ou 11, dans lequel un ascenseur vertical est disposé à une extrémité située en amont et/ou à une extrémité située en aval de la bande de reprise (30), afin de pouvoir transmettre à des postes d'expédition superposés (VS1,...., VSn) les marchandises (42) qui se trouvent sur la bande de reprise (30).

13. Accumulateur d'expédition selon l'une quelconque des revendications 10 à 12, dans lequel le point de transfert (41) est couplé à une section de transport d'expédition (56), qui peut alimenter une multiplicité de postes d'expédition (VS1, ...., VSn) agencés horizontalement l'un à côté de l'autre, avec des marchandises (42) suivant la séquence ordonnée.
